**Europäisches Patentamt**

**European Patent Office**

**Office européen des brevets**

(19)

(11) Publication number: **0 246 542**
**A2**

# EUROPEAN PATENT APPLICATION

(12)

(21) Application number: **87106865.6**

(22) Date of filing: **12.05.87**

(51) Int. Cl.³: **G 11 B 19/02**
**G 11 B 19/20, G 11 B 7/00**
**G 11 B 27/36, G 11 B 27/10**

(30) Priority: **23.05.86 JP 119741/86**

(43) Date of publication of application:
**25.11.87 Bulletin 87/48**

(84) Designated Contracting States:
**DE FR GB**

(71) Applicant: **Matsushita Electric Industrial Co., Ltd.**
**1006, Oaza Kadoma**
**Kadoma-shi Osaka-fu, 571(JP)**

(72) Inventor: **Yamada, Jiro**
**1-4, Takayanagi 5-chome**
**Neyagawa City, 572(JP)**

(72) Inventor: **Kinoshita, Susumu**
**13-4, Nanseidai 4-chome**
**Katano City, 576(JP)**

(72) Inventor: **Tomoda, Haruhisa**
**3-14, Miyuki-higashimachi**
**Neyagawa City, 572(JP)**

(74) Representative: **Patentanwälte Kirschner & Grosse**
**Herzog-Wilhelm-Strasse 17**
**D-8000 München 2(DE)**

(54) **Optical disc player.**

(57) An optical disc player of the present invention comprises at least a timer means for counting elapse of time from the start of reproducing of musics on an optical disc, an input means for entering an optional reproducing time, a memory means for storing the optional reproducing time and a logic processing means for comparing the passing time counted by the timer means, and besides an optional reproducing time stored in the memory and for stopping or pausing the reproducing of the musics when the passing time coincides with the optional reproducing time.

FIG.1

EP 0 246 542 A2

Matsushita Electric Industrial Co., Ltd.
Our ref.: H 7113.6 EP

0246542

May 12, 1987

## TITLE OF THE INVENTION

Optical disc player

## FIELD OF THE INVENTION AND RELATED ART STATEMENT

### 1.FIELD OF THE INVENTION

The present invention relates to an optical disc player such as a compact disc player or the like, and especially relates to an optical disc player having a timer for controlling the reproduction time of musics stored on an optical disc.

### 2.DESCRIPTON OF THE RELATED ART

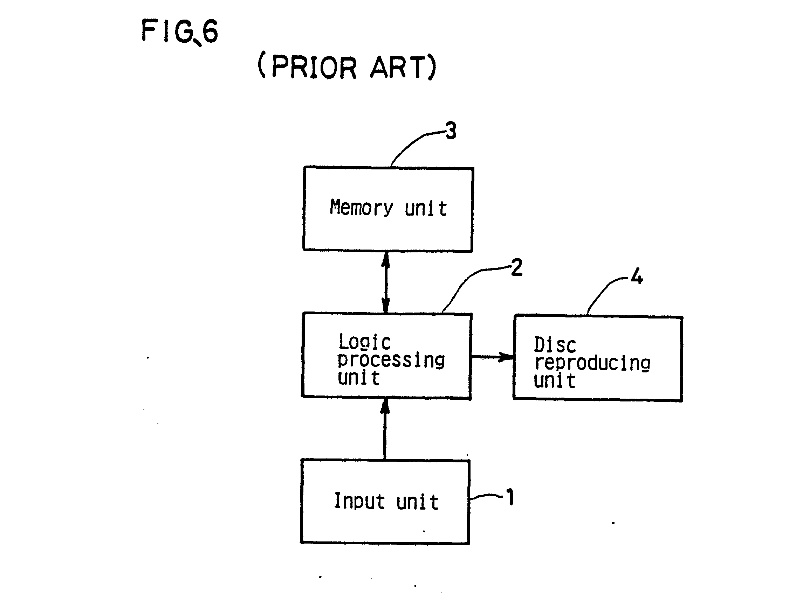

A conventional optical disc player is described as follows with reference to Fig.6. Fig.6 is a block diagram showing the schematic constitution of the conventional optical disc player which comprises an input unit 1, a logic processing unit 2, a memory unit 3 and a disc reproducing unit 4. Thereon the input unit 1 comprises, for example, plural key switches for entering a number of the position of a selected music on an optical disc to the logic processing unit 2, by which an user enters numbers of the position of the musics which he wishes to reproduce (listen) orderly. The logic processing unit 2 is, for example, a micro-processor and it transmits input signals from the input unit 1 to the memory unit 3 for storing and reads out them from the memory unit 3. The memory unit 3 is constituted, for example, by read only memories for storing an operation

1

program and random acess memories for storing data and it stores the input signals from the input unit 1. The disc reproducing unit 4 controls the position of a pick-up device on the disc for orderly reproducing data such as musics stored in the memory unit 3.

At first, the user enters code numbers of position of the musics which he wants to listen into the logic pocessing unit 2 by using the input unit 1, wherein the numbers of the position of the musics are orderly stored in the memory unit 3. Next, the logic processing unit 2 orderly reads out from the memory unit 3 a datum, which corresponds to number of the position of a music on the disc in due order of storing, and issues a signal corresponding to the number to the disc reproducing unit 4, and the disc reprodusing unit 4 controls the position of the pick-up device to reproduce (or to play) the musics on the optical disc. By repeating the above-mentioned operation, the musics which are stored in the memory unit 3 are serially reproduced.

In the conventional optical disc player, however, since it does not have a special timer unit for controlling automatic stopping or pausing operation of the reproducing of the optical disc, the user can not designate the time to stop the reproducing of the optical disc. When he wants to stop, pause or finish the reproducing after passing 30 minutes or 45 minutes from the start, he must start to count the time elapse from the start of the reproducing, and then stops, pauses or finishes the reproducing operation of the optical disc player after elapse of 30 munites or 45 minutes.

OBJECT AND SUMMARY OF THE INVENTION

The object of the present invention is to provide an optical disc player having a timer for automatically stopping, pausing or finishing the reproducing of musics stored on an optical disc.

An optical disc player in accordance with the present invention comprises;

an input unit for entering an optional reproducing time during which musics on an optical disc are to be reproduced,

a memory unit for storing data corresponding to the optional reproducing time,

a disc play-back unit for controlling the position of a pick-up device for reproducing the musics on the disc,

a timer unit for counting time elapsing from starting of the reproducing of the optical disc, and

a logic processing unit for comparing the optional reproducing time stored in the memory unit with the time counted by the timer unit, and for issuing a control signal to the disc reproducing unit for stopping the reproducing of the optical disc when the elapse time

3

coincides with the optional reproducing time.

BRIEF DESCRIPTION OF THE DRAWINGS

Fig.1 is a block diagram showing a schematic constitution of a preferred embodiment of an optical disc player in accordance with the present invention.

Fig.2 is a flow chart showing operations of the optical disc player shown in Fig.1.

Fig.3 is a block diagram showing a schematic constitution of another preferred embodiment of an optical disc player in accordance with the present invention.

Fig.4 is a flow chart showing operations of the optical disc player shown in Fig.4.

Fig.5 is a front view of the optical disc player, shown in Fig.1 or Fig.3.

Fig.6 is the block diagram showing the schematic constitution of the conventional optical disc player.

DESCRIPTION OF THE PREFERRED EMBODIMENT

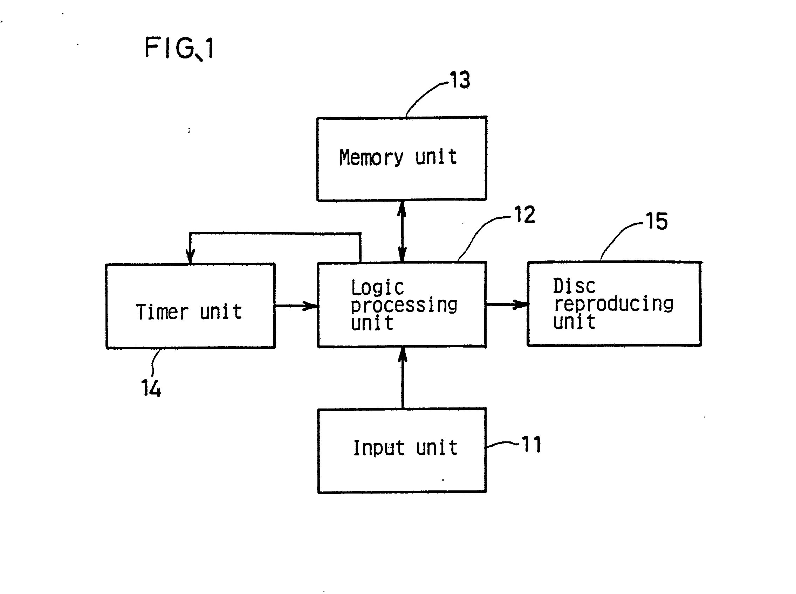

A preferred embodiment of an optical disc player in accordance with the present invention is described as follows with reference to Fig 1, Fig.2 and Fig.5.

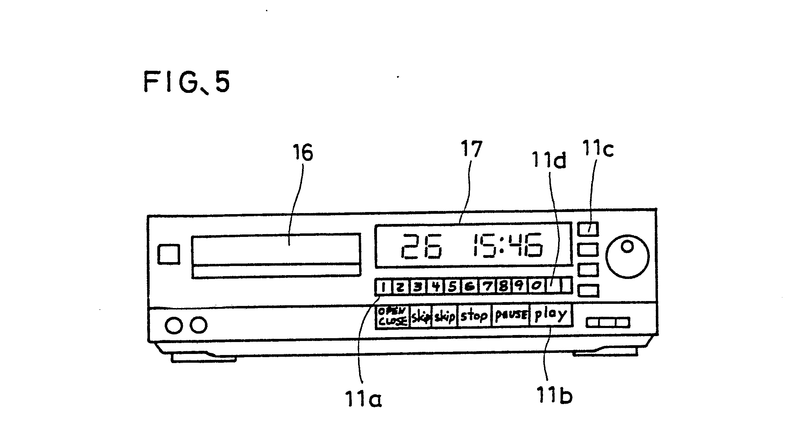

Fig.1 is a block diagram showing a schematic constitution of an optical disc player in accordance with the present invention, and Fig.5 shows a front view of the optical disc player, for example, shown in Fig.1. In Fig.1, the optical disc player comprises an input unit 11, a logic processing unit 12, a memory unit 13, a timer unit

4

14 and a disc reproducing unit 15. Hereupon, the input unit 11 is constituted of, for example, plural numeral keys 11a, a starting switch 11b, plural timer mode selecting switchs 11c, a memory switch 11d and the like, which are shown in Fig.5, and it is for entering data such as an optional reproducing time during which a user wishes to reproduce (listen) musics and a start signal by which the optical disc player starts to reproduce the musics stored on the optical disc. The processing unit 12 recieves the data from the input unit 11 and transmits them to the memory unit 13, reads out the data from the memory unit 13 and issues control signals to the timer unit 14 and to the disc reproducing unit 15. The memory unit 13 stores the data corresponding to the optional reproducing time and the other data from the input unit 11. The timer unit 14 starts to count the time elapse from the start of the reproducing of the optical disc at receiving of the start signal from the starting switch 11b, and issues counted data to the logic processing unit 12 at every moment. The disc reproducing unit 15 controls the position of a pick-up device which reads out the digital data stored on the optical disc by irradiating laser light on a surface of the optical disc and recieving the reflected light from the surface by recieving the control signals from the logic processing unit 12.

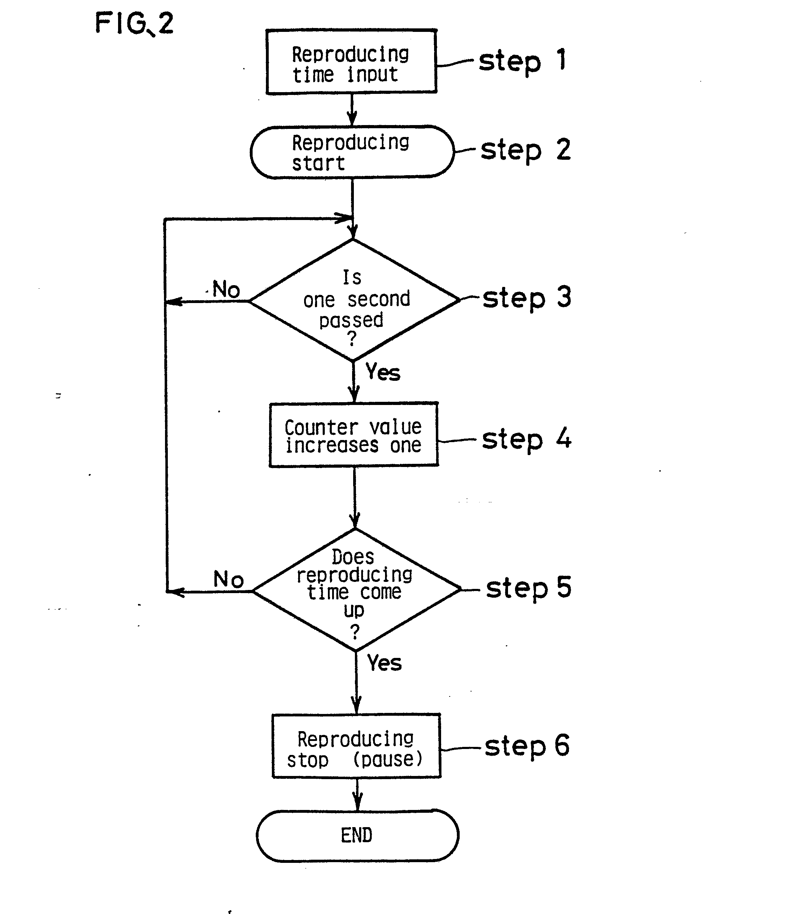

Fig.2 is a flow chart showing operations of the

5

above-mentioned optical disc player shown in Fig.1. In step 1, the reproducing time is set (for example as 30 minutes) by using the input unit 11. Detailed description is that, after setting the optical disc on a disc tray 16 and pushing one of the timer mode selecting switchs 11C so as to make the logic processing unit 12 recieve a datum corresponding to the reproducing time, the reproducing time is entered by using the numeral keys 11A. By such operation, the reproducing time set by the input unit 11 is stored in the memory unit 13 by transmitting of the logic processing unit 12. In step 2, the optical disc player starts to reproduce the disc by pushing the starting switch 11b of the input unit 11, and the timer unit 14 starts to count the time elapse, at the same time. Steps 3 and 4 show the time counting operation in the timer unit 14, and counter value increases by one at every second. It is more suitable to make the counting time period more short. Step 5 shows a comparison operation in the logic processing unit 12. In this step, the counter value is compared with the data corresponding to the reproducing time stored in the memory unit 13, and the counting operation in steps 3 and 4 are repeated until the counter value coincides with the data of the reproducing time, and then, when the counter value coincides with the data of the reproducing time the operation moves to step 6 and the reproducing of the optical disc player is stopped.

6

Hereupon, the stop of the reproducing in the step 6 may be, for example, a pausing operation as shown in Fig.2, which is for holding the pick-up device at a position of stopping of reproduction, a position of stopping (which is generally called so) for returning the pick-up device to the start position, or a stopping for finishing of the whole operation to cut off the electric power.

Generally, the reproducing of the optical disc is performed in the order of storing of musics on the optical disc. However, when the user does not wish to listen the musics in the order of the storing, he can change the order of the play back by, first pushing another timer mode selecting switch 11C in the step 1 thereby to change the reproducing mode of the optical disc player, and second, to store at least one number of the position of a music which he wishes to listen. One number of the position of a music, which he wishes to listen first, is set by using the numeral keys 11a, and by further pushing the memory switch 11d the number is stored in the memory unit 13. By repeating the above-mentioned way of operation, plural numbers in selected order of the position of the musics are stored in the memory unit 13. And then, by pushing the start switch 11b in the step 2, the optical disc player starts to reproduce the musics in the stored order until the reproduction time period is over. In the above-mentioned optical disc player, when

7

the reproducing time is over, the reproducing of the music instanteneously stops regardless of the reproducing being on the way or not. If a short extention of time is permitted, it is possible to extend the reproducing time period until the end of the music, which is then being played back. The optical disc such as the compact disc contains data representing a total reproducing time, a total number of the musics stored on the optical disc and the start positions of respective musics. Accordingly, by searching and picking up the start position of the music to be reproduced next, it is possible to stop the reproducing of the optical disc player when the pick-up device reaches to the start position of the next music.

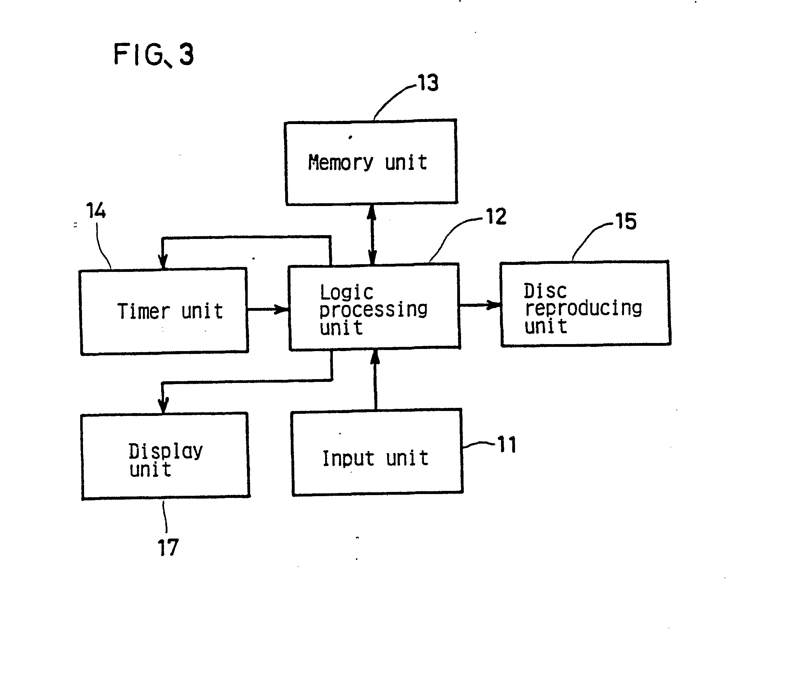

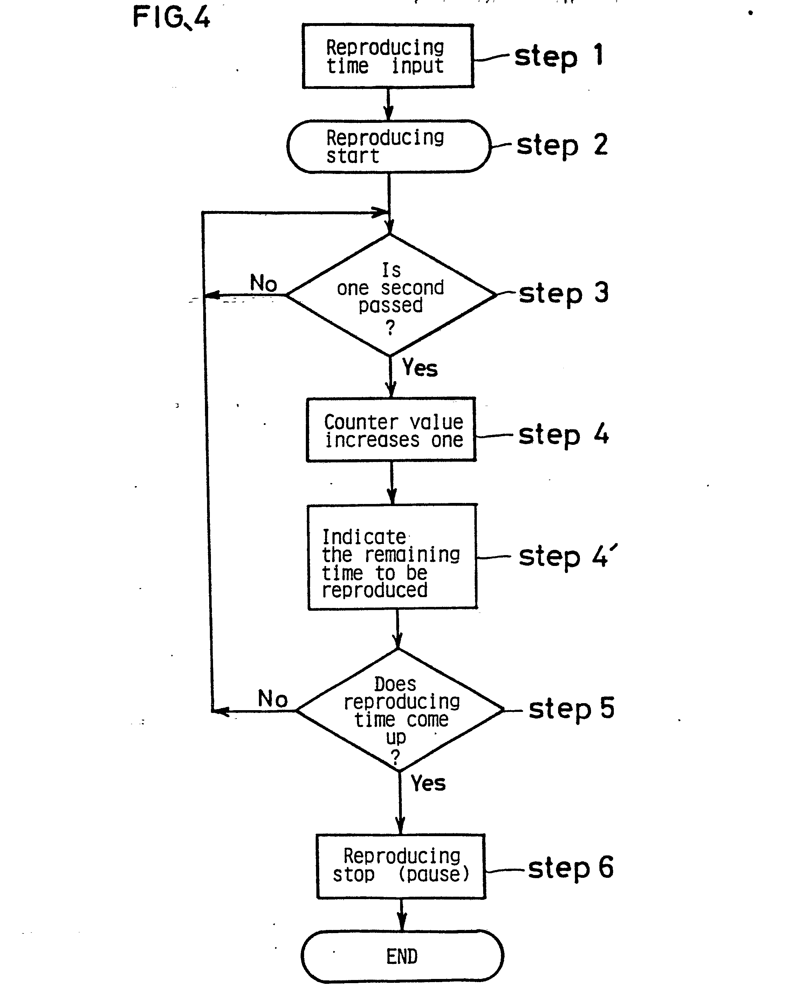

Another preferred embodiment of an optical disc player is described as follows with reference to Fig.3, Fig.4 and Fig.5. Such embodiment of the optical disc player further comprises a display unit 17 in Fig.3 and Fig.5 beside the above-mentioned embodiment shown in Fig.1. In Fig.4, the operations of the optical disc player comprises a step 4' for substracting the counted value in the timer unit 14 from the reproducing time stored in the memory unit 13 and for indicating the substracted value on the display unit 17. By using such substracting and indicating functions, the optical disc player can indicate the remaining time in the reproducing time which is set by the user. It is needless to say that

8

the counter value can be directly indicated on the display unit 17 which is for indicating the passing time from the start of the reproducing, and the user can see the remaining time or the elapsed time at any moment.

As the embodiments of the optical disc player in accordance with the present invention reproduces the optical disc until the optional reproducing time which is set by the user comes up to the end and stops the reproducing operation to wait the movement of the pick-up device in pausing mode at that time. And also, by stopping in the pausing mode, it is possible to continue the reproducing from the position where the pick-up device stays even after stopping of the reproduction. As a result, all the data stored on the optical disc can be smartly reproduced without unpleasant omission of its end part.

In case that the automatic stopping mode of the optical disc player is used for sleeping, namely the user has a sleep with listening musics, the reproducing of the musics is automatically finished when the optional reproducing time is over and the power of the optical disc player also automatically turns to off, he can easily sleep without any abrupt stop of the music. In this case, it is more suitable to make the volume of the reproducing of the musics gradually smaller when a music is newly reproduced.

9

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

**WHAT IS CLAIMED IS**

1.      An optical disc player comprising;

an input means for entering an optional reproducing time during which an optical disk is to be reproduced,

a memory means for storing said optional reproducing time,

a disc reproducing means for controlling position of a pick-up device for reproducing said optical disc,

a timer means for counting time elapsing from starting of the reproducing of said optical disc, and

a logic processing means for comparing said optional reproducing time stored in said memory means with said time counted by said timer means, and for issuing a control signal to said disc reproducing means for to stopping of reproducing of said optical disc when said elapse time coincides with said optional reproducing time.

2.      An optical disc player comprising;

an input means for entering numbers of the position of musics on an optical disc in optional order to reproduced and an optional reproducing time during which said musics are to be reproduced,

a memory means for storing data corresponding to said numbers of the position of said musics, said optional order and said optional reproducing time,

11

a disc reproducing means for controlling position of a pick-up device for reproducing said musics on said disc in due order by said data stored in said memory means,

a timer means for counting time elapsing from starting of the reproducing of said optical disc, and

a logic processing means for comparing said optional reproducing time stored in said memory means with said time counted by said timer means, and for issuing a control signal to said disc reproducing means for stopping of reproducing of said optical disc when said elapse time coincides with said optional reproducing time.

3.    An optical disc player comprising;

an input means for entering an optional reproducing time during which an optical disc is to be reproduced,

a memory means for storing data corresponding to said optional reproducing time,

a disc reproducing means for controlling position of a pick-up device for reproducing said optical disc,

a timer means for counting time elapsing from starting of the reproducing of said optical disc,

a display means for indicating time information due to output of said timer means, and

a logic processing means for comparing said

12

optional reproducing time stored in said memory means with said passing time counted by said timer means, and for issuing a control signal to said disc reproducing means for stopping the reproducing of said optical disc when said passing time coincides with said optional reproducing time.

4.      An optical disc player in accordance with claim 1, 2 or 3, wherein

said pick-up device stays on a position where it is in a pausing state when said passing time counted by said timer means coincides with said optional reproducing time.

5.      An optional disc player in accordance with claim 3, wherein

said display means indicates a remaining time which is subtracted said passing time from said optional reproducing time by said logic processing means.

13

0246542

FIG.1

216

0246542

FIG. 2

Reproducing time input — step 1

Reproducing start — step 2

Is one second passed ? — step 3
No

Yes

Counter value increases one — step 4

Does reproducing time come up ? — step 5
No

Yes

Reproducing stop (pause) — step 6

END

3/6

0246542

FIG. 3

Memory unit — 13

14 — Timer unit

12 — Logic processing unit

15 — Disc reproducing unit

17 — Display unit

Input unit — 11

416

0246542

FIG.4

```
┌─────────────────┐
│ Reproducing     │ ── step 1
│ time   input    │
└─────────────────┘
        │
        ▼
┌─────────────────┐
│ Reproducing     │ ── step 2
│ start           │
└─────────────────┘
        │
        ▼
       ╱ ╲
  No  ╱ Is  ╲
◄─── ╱ one second ╲ ── step 3
     ╲ passed    ╱
      ╲   ?   ╱
       ╲ ╱
        │ Yes
        ▼
┌─────────────────┐
│ Counter value   │ ── step 4
│ increases one   │
└─────────────────┘
        │
        ▼
┌─────────────────┐
│ Indicate        │
│ the remaining   │ ── step 4'
│ time to be      │
│ reproduced      │
└─────────────────┘
        │
        ▼
       ╱ ╲
  No  ╱ Does ╲
◄─── ╱ reproducing ╲ ── step 5
     ╲ time come  ╱
      ╲  up  ╱
       ╲ ? ╱
        │ Yes
        ▼
┌─────────────────┐
│ Reproducing     │ ── step 6
│ stop  (pause)   │
└─────────────────┘
        │
        ▼
     ( END )
```

## FIG.5

FIG.6

(PRIOR ART)

```
                    ┌─────────────────┐  ╮3
                    │  Memory unit    │
                    └─────────────────┘
                            ↕
        2╮                              4╮
    ┌─────────────────┐      ┌─────────────────┐
    │  Logic          │      │  Disc           │
    │  processing  ───┼─────→│  reproducing    │
    │  unit           │      │  unit           │
    └─────────────────┘      └─────────────────┘
            ↑
    ┌─────────────────┐
    │  Input unit     │  ╮1
    └─────────────────┘
```